# EUROPEAN PATENT SPECIFICATION

(11) **EP 1 493 096 B1**
(45) Date of publication and mention of the grant of the patent: **17.06.2009**
(21) Application number: 03719659.9
(22) Date of filing: 10.04.2003
(51) Int. Cl.: G06F 15/173, G05B 19/418

(54) **DATA-CENTRIC AUTOMATION**
DATENZENTRISCHE AUTOMATION
AUTOMATISATION CENTREE SUR LES DONNEES

(30) Priority: 10.04.2002 US 371142 P
(43) Date of publication of application: 05.01.2005
(73) Proprietor: Thermo Fisher Scientific (Asheville) LLC, Asheville, NC 28804 (US)
(72) Inventor: RILING, Dave, Franklin, TN 37064 (US); GREENWAY, Bryan, Franklin, TN 37064 (US); NORDSTROM, Gregory, Nashville, TN 37221 (US)
(74) Representative: Lang, Friedrich
(86) International application number: PCT/US2003/010883
(87) International publication number: WO 2003/088067

(56) References cited:
- WO-A-01/33277
- WO-A-01/79949
- US-A- 5 655 081
- US-A- 6 115 646
- US-A- 6 144 954
- US-B1- 6 484 177
- US-B1- 6 584 499

## Description

This application claims the benefit under 35 U.S.C. § 119(e) of U.S. Provisional Patent Application No. 60/371,142, filed on April 10, 2002.

### BACKGROUND OF THE INVENTION

### 1. Field of the Invention

This invention relates generally to the field of automation and, more specifically, to a system and method for data-centric automation.

### 2. Discussion of the Background

The field of automation has gone through several generational changes that have paralleled technological advances. For example, early automation systems were developed totally around a certain product design and, thus, were not able to easily adapt to design changes. As more flexible automation developed, enabled by the introduction and acceptance of programmable logic controller and robotics, automation could more easily accommodate evolutionary changes in a product's characteristics.

The next evolution in automation technology is based on the coupling of control and informatic processes that create, store, and ultimately use the same data to refine, adapt, and control the process. This process follows the basic premise of the theoretical Scientific Method with the primary difference being that the methods are now fully developed and extended to practice in a real-time automation control and parameter refinement system. Development of a data oriented control platform like this began in 1996 with the hypothesis that automation data could be used for more than trending as is the current process in industrial automation. Over the course of several years the concept was refined and matured and applied in the laboratory environment. The primary driver for this type of experiment control platform is the need to not only generate and store data during an automation event, but also to use the data to subsequently refine subsequent experimental runs.

The current state of art in automation and informatics allows a certain level of product adaptability, but does not address process adaptability. Other disadvantages exist. The ability to readily adapt to process changes has and will continue to be important to the Biotech/BioPharma marketplace as the nature of these industries depends on their ability to be agile in terms of their processes. Examples of known devices/methods in the field of automation/process control are disclosed in US 6,144,954 and WO 01/33277 A1.

### SUMMARY OF THE INVENTION

The present invention provides a data-centric control system according to claims 1 to 10 that overcomes the above and other disadvantages of traditional control systems.

According to one embodiment of the invention, the data centric control system includes: (a) a user input component; (b) a control engine; (c) a data repository; (d) an inspection/quality assurance system; and (d) a refinement or optimization engine. The user input component enables a user to define a process (script) to be performed by the control engine and parameters to be used by the control engine in performing the process. Typically, the control engine produces a "product"as a result of performing the process using the specified product parameters.

Advantageously, the control engine is modular in design so that the data centric control system will have maximum flexibility. In one embodiment, the control engine includes, for each piece of automation equipment, a control module for controlling the piece of automation equipment. The control engine also includes one or more directors for operating the control modules and for retrieving scripts (e.g., experiment parameters) from the repository and executing the scripts. A script defines a process.

The refinement engine refines the product parameters for subsequent product improvement. For example, in the case of screen optimizations for experiments, the engine can generate a follow on set of experimental definitions to allow the subsequent experiments to progress with the aide of statistical, heuristic, and rules based algorithmic approaches without requiring new scientific effort to refine subsequent experimental runs using the automation equipment.

The above and other features and advantages of the present invention, as well as the structure and operation of preferred embodiments of the present invention, are described in detail below with reference to the accompanying drawings.

### BRIEF DESCRIPTION OF THE DRAWINGS

The accompanying drawings, which are incorporated herein and form part of the specification, illustrate various embodiments of the present invention and, together with the description, further serve to explain the principles of the invention and to enable a person skilled in the pertinent art to make and use the invention. In the drawings, like reference numbers indicate identical or functionally similar elements. Additionally, the left-most digit(s) of a reference number identifies the drawing in which the reference number first appears.

FIG. 1 is high-level, functional block diagram of a data-centric control system according to an embodiment of the present invention.

FIG. 2 depicts a generic data-centric control system process according to an embodiment of the present invention.

FIG. 3 is a flow diagram illustrating the steps performed in an automated protein crystallization process.

FIGS. 4-6 illustrate example graphical user interfaces that enable the user to define a protein crystallization experiment.

FIG. 7 is a diagram illustrating the architecture of one embodiment of the control engine.

FIG. 8 is functional block diagram of the refinement engine according to an embodiment of the present invention.

FIG. 9 shows a graphical user interface that is provided by the Q&R module.

### DETAILED DESCRIPTION OF THE PREFERRED EMBODIMENTS

While the present invention may be embodied in many different forms, there is described herein in detail an illustrative embodiment(s) with the understanding that the present disclosure is to be considered as an example of the principles of the invention and is not intended to limit the invention to the illustrated embodiment(s).

Further, while all facets of automation systems (industrial to laboratory) could benefit from a data-centric control system implementation, a preferred use of such a system is one in which the automated processes or parameters (such as those used to define experiments in laboratories) vary widely and can generate data during automation runtime and through inspection results, which data can be used to influence change or alter current or future production parameters.

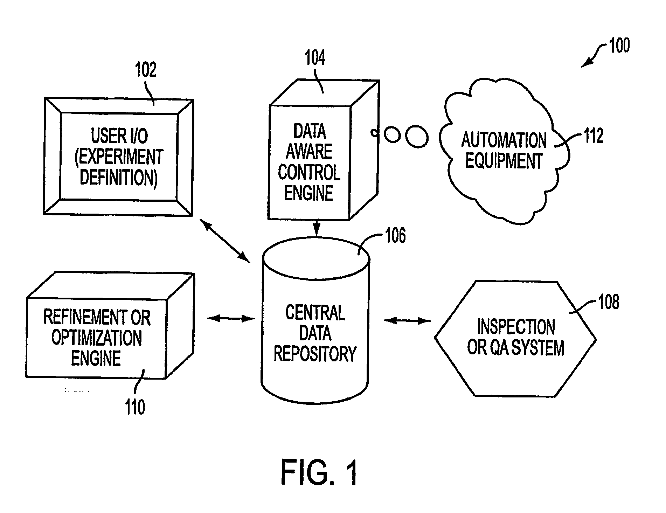

FIG. 1 illustrates a high-level, functional block diagram of a data-centric control system 100 according to an embodiment of the present invention. Data-centric control system 100 is typically composed of the following components: (a) a user input component 102; (b) data aware automation control software 104 (a.k.a., "control engine 104"), which is typically executed on a PC and used to control all automation equipment and interface with a central data repository; (c) a data repository 106 (typically one or more relational or other databases); (d) an inspection/quality assurance system 108; and (e) a refinement or optimization engine 110. Each component of system 100 is described below.

User input component 102 includes software that enables a user to specify product parameters and stores the parameters in data repository 106. As used herein, the term products refers not only to tangible objects but also to processes, including experiment definitions. The data repository 106 contains the definition of the product to be developed. User input component 102 is used to setup the product definition and then retrieve all data related to the experiment (as generated from one of the three unique sources). User input component 102 is also responsible for any automated or user prompted parameter refinement conditions.

Control engine 104 communicates with data repository 106 to obtain product parameters and in turn task automation equipment 112 to "create" the product. In addition to obtaining the product parameters, engine 104 is responsible for obtaining and storing in repository 106 product tracking information, product status, equipment status, exception events, etc.

Data repository 106 is the data warehouse for the system 100. It is typically implemented using one or more databases (preferably one or more relational databases) but could be implemented using various other technologies such as spreadsheets, text files, or computer memory. Repository 106 has the responsibility of storing data generated by the three data creation sources.

Inspection/quality assurance system 108 implements an inspection phase of product generation. It is during this inspection phase that critical data is generated to determine the product characteristics such as experiment results, or product quality. These results are written back to data repository 106 and can in turn be used along with all of the data collected concerning the particular product to refine or optimize the product creation parameters for subsequent automation runs as described in the last phase of the system.

Refinement or optimization engine 110 refines the product parameters for subsequent product improvement. For example, in the case of screen optimizations for experiments, engine 110 generates a follow on set of experimental definitions to allow the subsequent experiments to progress with the aide of statistical, heuristic, and rules based algorithmic approaches without requiring new scientific effort to refine subsequent experimental runs using the automation equipment 112.

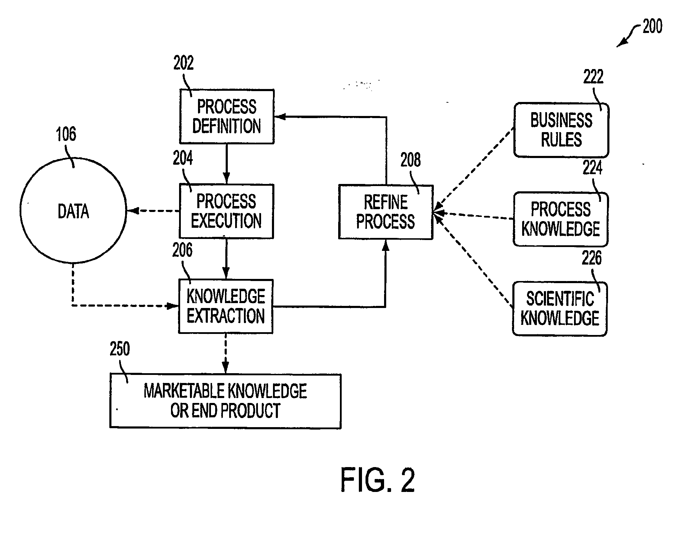

FIG. 2 depicts a generic data-centric control process 200, which can be implemented in whole or in part by data-centric control system 100. Process 200 both creates and uses information. The goals of process 200 are (1) to mine from the data repository 106 knowledge that can be used to subsequently improve process parameters (i.e. adapt to new processes or experiments); (2) to provide a readily available source of data which can be easily and efficiently mined for details; and (3) to collect all possible data points related to the product creation or experimental results which includes all tracking information, product or experiment results, equipment exceptions, process creator, etc. A description of each step shown in Figure 2 follows.

Process Definition step 202 - during this step all information necessary to drive the automation process is compiled. Such information may include: (1) product design information, (2) method or task development as related to the automation equipment, (3) customer and business information, (4) a priori task scheduling, (5) subsequent process refinement rules or boundary conditions, (6) rules for notification of product or experiment status, etc.

Process Execution step 204 - during this step, control engine 104 executes and monitors tasks associated with automation equipment control, instrument control, robot control, data acquisition/storage, error handling or exception handling, process status, task management, user notification, etc.

In knowledge extraction step 206 product knowledge is obtained. Product knowledge may be obtained directly from the process results (i.e. inspection or QA results such as quality of product or quantifiable measured results of an experiment through image and PMT analysis, mass spectrometry analysis, ADME data analysis, etc.). Product knowledge may also be obtained from a detailed mining of the total accumulated product data stored in repository 106. The knowledge obtained in step 206 may be used to improve (i.e. adapt) the process as a pre-cursor to further processing and/or may be knowledge that itself has value.

In refine process step 208 the process may be refined based on the knowledge obtained in step 206. Automatic process improvement is one of the target goals of system 100. Process improvements can be realized in one of three approaches: automatic, semi-automatic, or manual.

The automatic approach implies system 100 includes the requisite knowledge and rules (or boundary conditions) available to automatically adjust product parameters to adapt automation equipment 112 for ongoing or future products based on earlier product data analysis. The semi-automatic approach implies human interaction with system recommended parameter modifications is required. This human interaction element could be to provide an approval avenue before parameter modification occurs, allowing human interaction to add additional parameters to the recommended modifications, validate resource availability prior to parameter change, schedule parameter change time frame, etc. The manual approach implies that system 100 notifies a user that past product results are less than optimal or that additional parametric modifications may optimize ongoing or future products and action should be taken.

Regardless of the approach used the process refinement is influenced by several factors, including: (a) Business rules 222- how much effort, time, resources and / or money is put into product or experiment refinement, (b) Process knowledge 224- what are the process limitations and baseline capabilities of the automation equipment, (c) Scientific, engineering or product knowledge 226 - what can be altered to improve the process output or what should the process parameters be to give produce the product or experimental data desired.

An end product of process 200 may be marketable knowledge 250. The methodology of the present invention affords the capability to amass data before, during, and after automation runs without requiring a separate process to collect, collate, analyze, or mine the data for marketable knowledge. Thus greatly simplifying data collection and analysis and allowing data to be reused for product optimization or to readily locate and identify data which has a marketable knowledge associated with it such as experimental results. To achieve this goal, the present invention affords the ability to not only specify the data to be collected, but also provides the ability to collect data during a product run (e.g., an experiment) so that the analysis can take advantage of all data that is created linking data collection, analysis, and automation control into one cohesive system instead of the classical approach of breaking down each component as a unique element with little to no bond to the other elements.

Benefits of data-centric control system 100 include improved use of data and generated knowledge data is readily available, and feedback mechanisms are well established, reduced time from generation of knowledge to use of knowledge. Additionally, system 100 is more adaptable to process changes. Further, system 100 provides a ready conduit for data mining and common data repository access can be widely available to multiple users. Also, system 100 enables the creation of more data with increased value (e.g., data creation rates are higher, more attention is given to each piece of data, thus more value is gleaned from the product). Other advantages also exist.

For the purposes of clarity, and not to limit the invention, a specific embodiment of data-centric control system 100 for use in an automated protein crystallization process will be described below; however, the system and process described below can be applied across a wide range of automation applications as previously discussed.

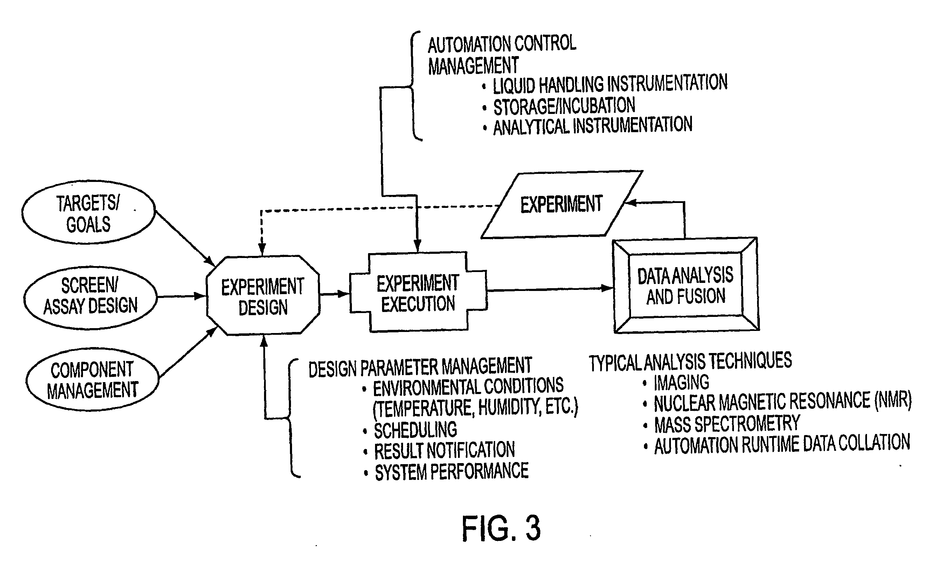

Referring now to FIG. 3, FIG. 3 is a flow diagram illustrating the steps performed in an automated protein crystallization process. FIG. 3 is a particular application of the flow diagram shown in FIG. 2, thus, like the flow diagram shown in FIG. 2, the flow diagram shown in FIG. 3 includes for main steps. As shown in FIG. 3, the four main steps include: (1) experiment design; (2) experiment execution; (3) data analysis and fusion; and (4) experiment refinement.

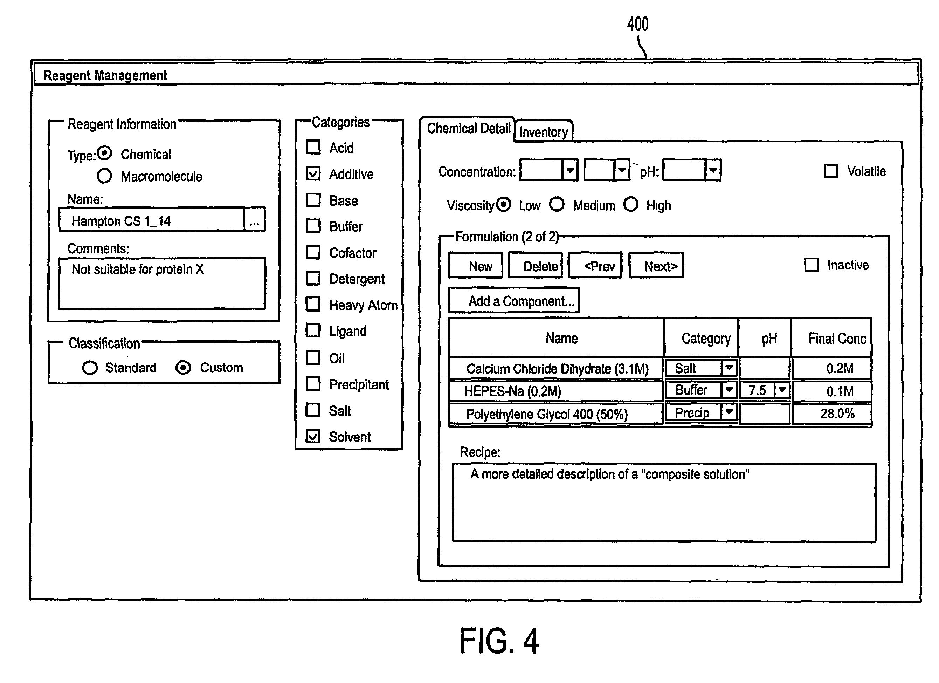

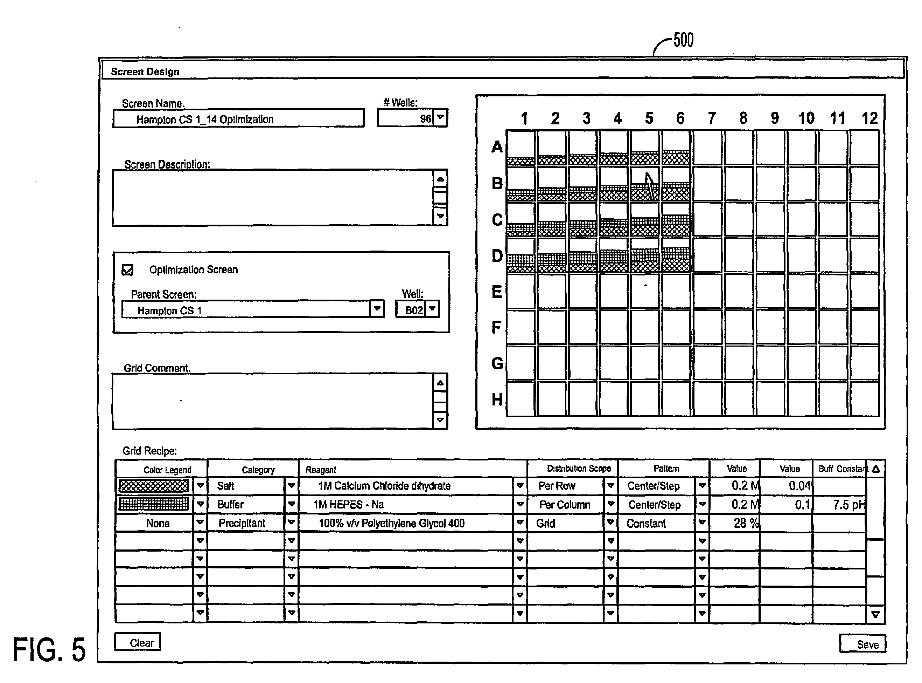

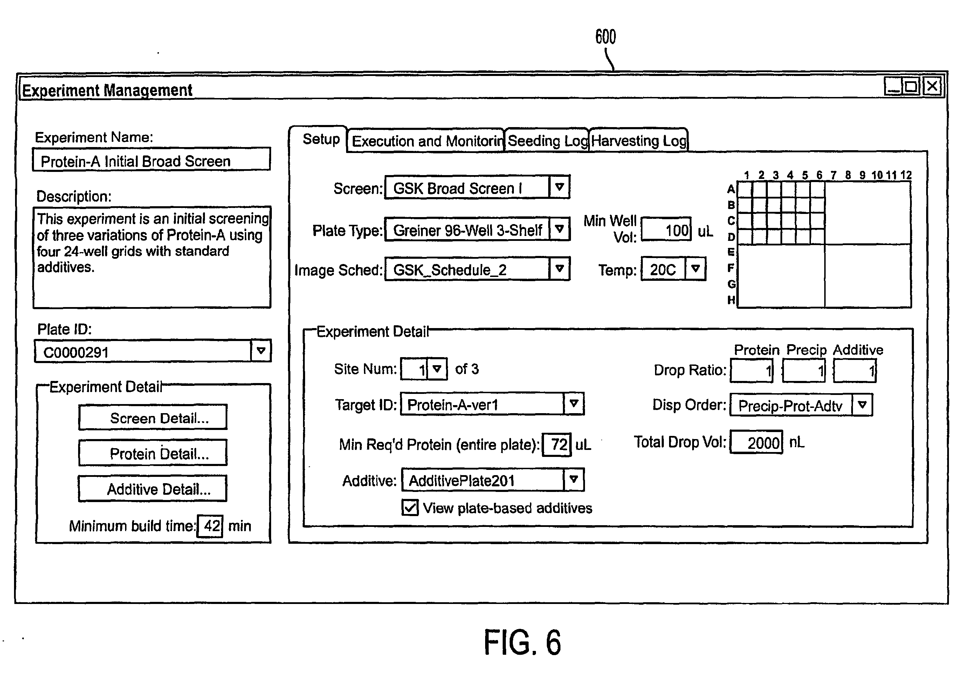

The first step, experiment design, is performed by a user of system 100 with the aid of user interface component 102. In one embodiment, user interface component 102 displays on the user's computer a graphical user interface (e.g., web pages or electronic forms or other graphical user interface) that enables the user to define the experiment. FIGS. 4-6 illustrate example graphical user interfaces that enable the user to define a protein crystallization experiment. More specifically, FIG. 4 illustrates a graphical user interface 400 that enables the user to define chemical and macromolecule reagents that can be subsequently used in an experiment. FIG. 5 illustrates a graphical user interface 500 that enables the user to compile reagents into a screen, which defines the components to be used in a specific experiment. As shown in FIG. 5, defining a screen includes the step of specifying distribution parameters associated with a set of well contents (i.e., the grid recipe). FIG. 6 illustrates a graphical user interface 600 that enables the user to design the experiment. That is, user interface 600 enables the user to select a plate id, a plate type (which also defines the experiment methodology as to sitting drop, hanging drop, micro batch, etc.), a screen, an image schedule, a grid dimension, and drop site details.

After the user uses the graphical user interfaces 400-600 to define an experiment, user interface component 102 stores in data repository 106 the parameters of the experiment. In this example, the parameters include, among other things, the user selected screen, plate id, plate type, image schedule, and drop site details.

The next step, experiment execution, is performed by control engine 104. Control engine 104 employs a universal software architecture to facilitate the rapid integration and deployment of automation systems. The architecture design is based upon the premise that complex systems can be decomposed into sub-components of lower complexity and higher reliability, and that these sub-components can be assembled and integrated to provide control and coordination of a complex system. This collection of software components can reside on a single computer or can be distributed over several networked computers in order to provide system modularity and/or computational load balancing. The modular aspect of this approach allows for the re-use of components and the rapid assembly/modification of very complex software control systems.

Therefore, control engine 104, at the lowest level, includes a control module for each piece of automation equipment 112 (e.g., robots, cameras, etc.) that is to be controlled. For example, in one embodiment automation equipment 112 includes a camera system, thus, in this embodiment, control engine 104 includes a camera control module that is associated with the camera and that performs all of the low-level control aspects of operating the camera (such as communicating with the camera, acquiring a picture, or setting cameras parameters).

Preferably, each control module of control engine 104 exposes an external interface to which another, preferably higher-level, module can be dynamically linked (via DCOM, for example). This external interface enables the other module to operate and receive information from the automation equipment that is controlled by the control module with which the higher-level module is interfaced. For example, if control engine 104 includes a control module that is associated with a camera, then that camera control module includes an external interface that enables another module to communicate with the camera control module. This communication path enables the other module to operate the camera by sending commands to the camera control module through the camera control module's external interface. A Graphical User Interface (GUI) can also communicate with the camera control module through this external interface to provide an interface between a user and the camera.

In addition to including control modules for directly controlling each piece of automation equipment, control engine 104 may include one or more director modules. A director module coordinates the operation of one or more control modules.

For example, if the automation equipment 112 includes an imaging system that consists of the following elements: a camera, a motorized lens, a lighting element, and a motion stage, then control engine 104 may include a control module for each element of the imaging system and a director module for the whole imaging system. The imaging system director module functions to coordinate the individual control modules, each of which control just one of the elements of the imaging system, to perform a particular task. In one embodiment, the imaging system director module possesses a program (e.g., a script) that prescribes how each control module should be operated in order to capture images in a particular way. Based on this script, the director communicates with the control modules and through the control modules operates the elements in the prescribed manner.

The director may reference data stored in data repository 106 that represents parametric information used in the script. Also, the director may be configured to read a script from data repository 106 and execute the script. Each director is capable of executing a pre-defined set of commands. Thus, the script can include one or more of these pre-defined commands. For example, the imaging system director may be pre-configured to execute the following two commands: (1) capture color image and (2) capture black and white image. When the imaging system director is directed to execute one of these commands, the director will carry out the command by communicating with the appropriate control modules and issuing the appropriate instructions to these control modules. This scripting feature allows for a highly reconfigurable and agile control engine 104 whose operation can be changed simply by making changes to a script in repository 106.

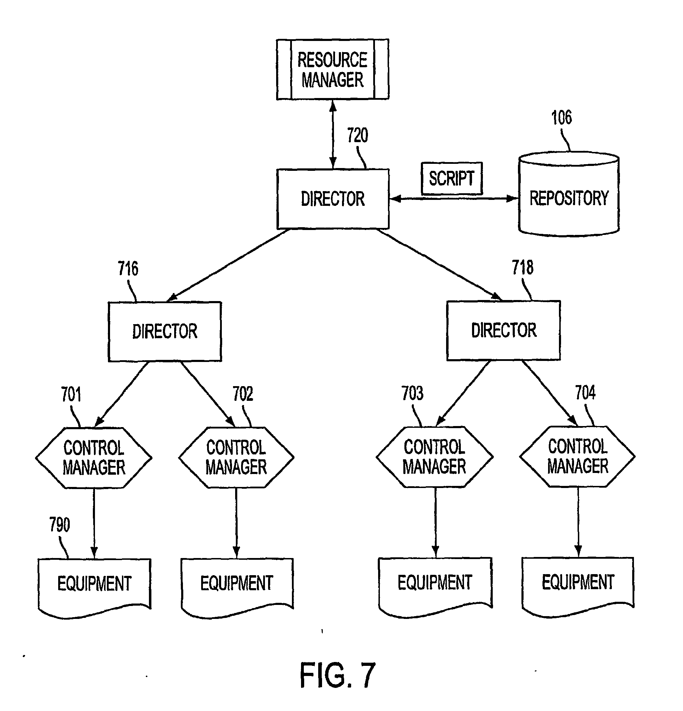

FIG. 7 is a diagram illustrating the architecture of one embodiment of control engine 104. As shown in FIG. 7, control engine 104 can include one or more control modules (CMs) and one or more directors (DIRs). Engine 104 can also include a resource manager (RM), as described below. As shown in FIG. 7, control module 701 controls automation equipment 790 (e.g., a camera), director 716 coordinates and controls control modules 701-702, director 718 coordinates and controls control modules 703-704, and director 720 coordinates and controls directors 716 and 718. As also shown in FIG. 7, a director (e.g., director 720) can retrieve a script from repository 106. After retrieving a script, director 720 executes the commands in the script, which typically requires director 720 to send commands to directors 716 and/or 718, which in turn sends commands to the appropriate control module, which in turn may send a command to its associated automation equipment. In this manner, the equipment can be controlled via a script stored in repository 106.

Similar to the low-level, control modules, the director modules may include an external interface to which other modules or a GUI can use for communicating with the director module.

For complex systems, a hierarchy of directors may be set-up to in order to effectively distribute responsibility of system control. This is useful when several complex sub-systems are integrated into a single coordinated system. In situations where the control engine 104 spans across more than one computer, a resource manager module is placed on each computer. The resource manager keeps track of the directors and control modules on that computer as well as a list of all of the other resource managers on the network. When a director on one computer needs to communicate with a resource manager on another computer, that director gets information on how to perform that communication from the resource manager which shares the computer with that director.

Operation of control engine 104 is highly dependent upon parameters, configuration data, scripts, process steps, and other miscellaneous information, all of which may be stored in data repository 106. Repository 106 also serves as a repository for all data that is collected during operation of system 100. Interface to repository 106 is preferably handled by a data abstraction layer (DAL). The DAL allows the underlying database engine(s) to be changed transparently to the rest of the system. In other word, for example, the control engine 104 communicates with the DAL to get information from the database; if the database engine from vendor 1 is replaced by a database engine from vendor 2, there are no required changes other than a configuration parameter change in the DAL.

Control engine 104 may further include an adaptive scheduling component (not shown). In order to efficiently manage a series of complex automation tasks, a scheduling component is beneficial. Static schedulers mandate events to follow a set pattern and can provide a level of system optimization by adhering to this fixed pattern; however, if an unplanned event occurs such as a system fault or the introduction of a higher priority task the optimization pattern can be preempted and a less than optimal pattern will result. It is for this scenario that the adaptive scheduling component employs a conflict resolution rule set, which can provide a better long term solution to a dynamic event system such as an automated protein crystallization system. The scheduling component includes scheduling algorithms that not only provide a facility for users to input static schedules but also provides the ability for the system to interact with the schedule sets an develop optimal patterns as unplanned events unfold. In one embodiment, the components of the scheduling component include: 1) a set of relative image events, 2) a time tolerance associated with each unique event, 3) a prioritization scheme for each experiment in the system, and 4) the number of resources capable of servicing the request. From these components a dynamic schedule that is related to system time can be generated and refined over a period of time. This type of system allows for the ability to balance a complex system across multiple similar resources for example imagers and also to accommodate and planned maintenance of the resources. The scheduler can determine system utilization and define optimal system loading constraints.

Referring back to FIG. 3, the next step, data analysis and fusion, is performed by control engine 104 in conjunction with inspection/QA system 108. In this step automation results data is produced and stored in repository 106. Automation results data are related to a particular set of experiments through a common plate barcode. Automation results data consists of two types of data: 1) analytical such as image processing results and 2) statistical data such as modeled data from previous experiments which display similar traits. Each type of data is an outgrowth of the automation and subsequent analysis instrumentation and is related back to the basic experiment through the use of a common data element; in the case of protein crystallography, the common data element is the unique plate bar-codes. This association is done in the data repository 106.

Analytical data is created during the analysis stage of the experiment through the use of, for example, image processing, light scattering, NMR, mass spec, or x-ray diffraction data processing in the case of protein crystallography. These data components provide information regarding the status of crystal detection, precipitate detection, or early stages of protein aggregation. Each data set has a quantifiable parent event (i.e., the data is a direct result of a particular analysis event).

Statistical data is not created typically from a single discreet event but is generally a derived from a compilation of such events over an extended period of time. Such an example of this data type is the time lapsed data associated with light scattering analysis for a particular well in a protein crystallography experiment. The temporal data series in this case can be filtered to predict early stages of protein aggregatic in clear drops. This is accomplished by trending the statistical data collected over the time frame and predicting future values using a neural network or other adaptive filtering technique for estimation.

Referring again back to FIG. 3, the next step, experimen refinement, is performed by refinement/optimization engine 104, although the user of system 100 may participate in this step. As described above, system 100 allows users (e.g., scientists) to plan, define, conduct, and analyze protein crystallography experiments - a critical part of discovering a given protein's molecular structure. Such experiments fall into two general categories - broad screen and optimized screen experiments. Broad screen experiments are a "first-pass" method of experimentation, picking essentially random conditions across a large experimental space, while optimized experiments are designed to explore a narrow but productive set of conditions. Optimization is necessary because initial attempts at protein crystallization (i.e. successful broad screen results) typically yield small and/or structurally nonuniform crystals. Such crystals, while indicating that the target protein can, in fact, be crystallized, are generally unsuitable for the necessary structural analysis that follows the crystal growth phase of the structure discovery process.

A feature of system 100 is its ability to automatically create optimized experiments based on results from earlier (i.e. broad-screen) experimentation. Through refinement/optimization engine 110, system 100 enables the scientist to quickly and efficiently "zero-in" on the experimental conditions that will lead to large, well-formed, optimized crystals, while reducing the amount critical resources (e.g. source protein) necessary to achieve high quality crystal yields.

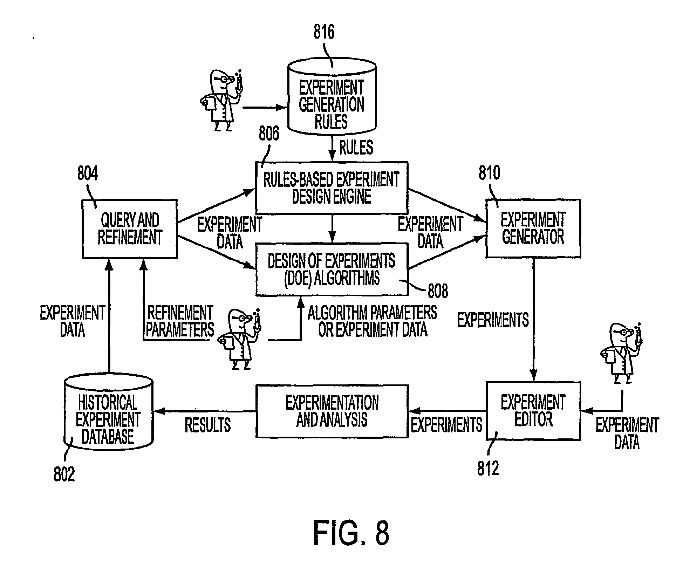

Four methods for creating optimized experiments using system 100 are available to the scientist - a fully manual method and three automatic methods (the manual method will not be discussed). The automatic methods all rely on refinement/optimization engine 110, which, in one embodiment includes the following components (see FIG. 8): a historical experiment database 802, a query and refinement module 804, a rules-based experiment design engine 806, design of experiments (DOE) engine 808, an experiment generation module 810, and an experiment editor 812.

Historical experiment database 802, which, preferably, is a component of repository 106, stores the complete record of all previous experiments performed by system 100. This includes relevant data on the proteins (e.g. target type, concentration, buffering solution, and all chemical additives) and precipitating agents (chemical type, category, concentration, pH, distribution patterns across the titration plate, etc.) used in each experiment Also recorded in database 802 are each experiment's environmental conditions along with a time-ordered set of images taken of the crystal growth sites over the course of the experiment, as well as the results of the experiment (i.e. the type, color, shape, and quality of any crystals that formed). Because its contents fully document an experiment's initial conditions, conduction parameters time-ordered results, and analysis, database 802 can, once analyze according to specific criteria, be used to guide further investigations and automatically generate future experiments (i.e. optimization experiments).

As mentioned above, many parameters are stored in database 802 for each experiment. However, scientists can only make use of the data stored in database 802 if that data can be extracted in a quick and meaningful way. This is the function of query and refinement (Q&R) module 804. Q&R module 804 is an iterative database query tool, taking filter and search input cues (i.e. indications of which data to either focus on or exclude from further consideration during a Q&R operation) from the user and applying them to data from database 802 - along with various refinement parameters provided by the user - to create statistically significant subsets of experimental data for use in creating refined experiments.

Q&R module 804 has several features. First, it does not require the user to learn any database-specific query languages (e.g. Structured Query Language, or any of the variants of SQL), but rather allows the user to construct queries in an expressive, graphical manner. And while other software packages also purport to allow graphical querying, these are often nothing more than connected textual fields that help the user assemble an SQL query (essentially an SQL writing aid). The Q&R module is quite different in that it allows the user to graphically describe the desired data relations through a construction of series and parallel connections between iconic representations of data fields.

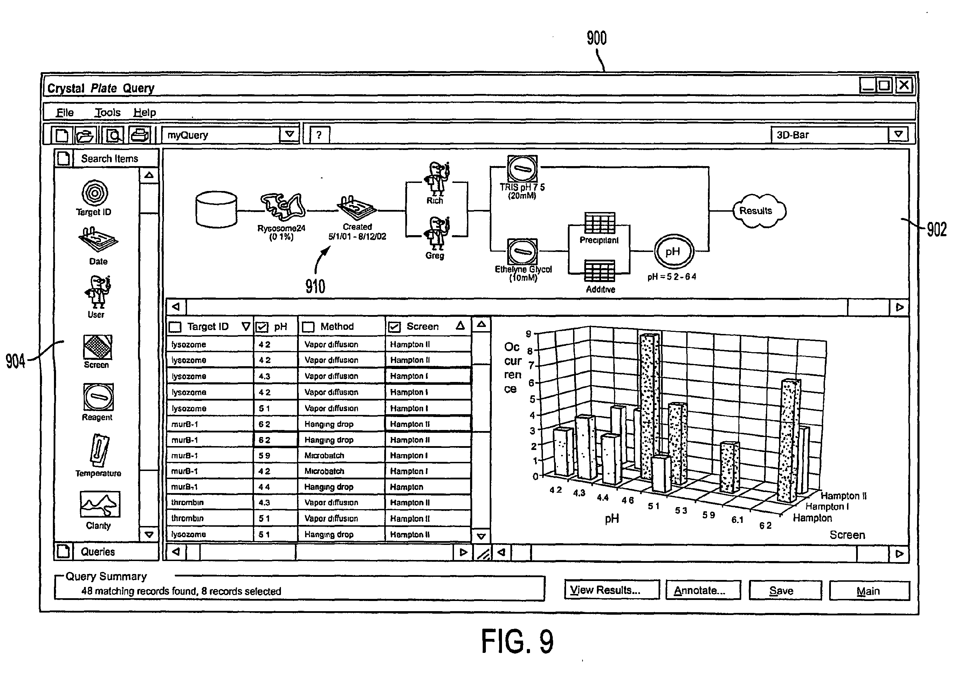

This is best illustrated by referring to FIG. 9, which shows a graphical user interface 900 that is provided by Q&R module 804. More specifically, an upper panel 902 of GUI 900 illustrates a construction of series and parallel connections between iconic representations of data fields, which construction corresponds to a database query. By using simple series ("AND") connections and parallel ("OR") connections, the user can form extremely complex data query relationships easily and quickly. Icons representing the data fields (dragged and dropped from a left panel 904 of GUI 900) allow the user to specify specific data values. As an example (again referring to the upper panel 902) the second icon from the left (icon 910) represents a database field containing protein information. By changing the name of this icon (allowed by the Q&R editor) to reflect the particular protein of interest, the user can limit the data coming from database 802 to only records pertaining to that type of protein.

Once the user has created a query by dragging and dropping icons from left panel 904 to upper panel 902, the query itself may be named and saved as an icon, to be later edited and/or reused to retrieve more data from the database. These saved queries are hierarchical in nature, and may be included in new, more complex, queries as the user sees fit. This approach represents a breakthrough in database query technology, allowing a high degree of flexibility while yielding a focused, powerful, and complex query mechanism that is intuitive to the user and can be learned quickly.

Another feature of Q&R module 804 is the dual-mode representation of resultant data that may appears as the user is creating the query. That is, as queries are created, the user can see the results of the query in both tabular form (column-wise) and graphical form (two- and three-dimensional graph-based). The user can select data from certain column and row locations of the table or directly from the bar-graph to indicate which data is to be retained and/or discarded in the on-going refinement process. This allows the user to rapidly "zero in" on the desired portion of the experimental results space (e.g. where previously performed experiments have yielded the best results) or to isolate conditions that were favorable for a particular type of experimental result (e.g. to show how well a given type of chemical additive performed under various temperature conditions).

Once the user has isolated the desired historical experimental results, new refined experiments may be created and conducted. Traditionally, the process of creating refined experiments has been time-consuming and somewhat "hit-or-miss." The ability to create and conduct refined experiments is limited by several factors (e.g., available resources - including protein solutions, chemicals, time, equipment availability, etc - and available scientific knowledge). Scientific discovery is, by its very nature, individualized to the researcher conducting the experiments, and one researcher's methods may lead to rapid success, while another's may take years to achieve good results.

What the refinement/optimization engine 110 provides is a mechanism to direct the experiment refinement process in a goal-directed way, ensuring that all future experiments are leading toward a solution and not away from it. Engine 110 provides this help in two ways: (1) a rules-based approach, where previously captured "best practice" knowledge is applied to the design of future experiments, and (2) by statistical analysis of the historical data in order to advise the scientist as to which types of refined experiments should next be performed. Engine 110 allows both of these avenues to be explored at experiment design time using rules-based experiment design engine 806 and design of experiments engine 808, both of which are described below.

Rules-based experiment design engine 806 (or "rule engine 806") enables users to create protein crystallography experiments automatically using rules created by other users. Rules-based systems have existed for years, but the present system uses them in a new and unique way - to capture and experimentation information in an automated experiment generation environment. Such an approach allows business entities to retain critical laboratory and procedural-based intellectual property (IP) and to make that IP available for use by future generations of experimenters.

Rules engine 806 captures the scientific thought process of laboratory scientists, retains that information indefinitely, combines that information with current experimental requirements to generate "goal-directed" refined experiments, and allows scientists to build on the "best practices" of previously successful experimental crystallographers.

In order to provide the above features, rules engine 806 requires rules, which are, preferably, created by personnel knowledgeable in protein crystallography (e.g., lab scientists who conduct such experiments) and inputted into a rules database 816. Traditionally, this "information capture phase" has been a stumbling block for rules-based systems, since they require the domain experts (scientists in this case) to learn an arcane computer-based language with unfamiliar syntax and semantics. System 100 improves on this by providing a language that is targeted specifically to the protein crystallographer. The rules can be expressed in a natural language very similar to the way scientists describe their own experimental parameters and analysis procedures (e.g. "If a crystal of at least 75 microns appears where Ammonium Sulphate was used as a precipitating agent, then increase the concentration of Ammonium Sulphate in the refined experiment in 0.02 molar increments for six steps"). By making the language easy to understand and apply, scientists can record their best practices quickly and accurately while focusing on the science they've performed, not the recording process itself.

In order to capture and interpret the rules developed using the scientist's vernacular a translation module (not shown) is used. This translation module, which is a component of rules engine 806, associates keywords in the rules to an expert system inference module, which is also a component of rules engine 806.

Once the rules have been captured, rules engine 806 applies them to an historical experiment data set created by Q&R module 804. The expert system inference module of engine 806 selects from rules database 816 the proper subset of rules to use, applies those rules to the data set, and generates a refined set of experimental data for the experiment generation module 810 (see below). It should be noted that once a rule set exists in rules database 816, the process of selecting and applying those rules to new data sets can be entirely automatic, thereby requiring no further input from the user.

In addition to using rule sets for the direct generation of new, refined experiments, rules engine 806 can also be used to automatically generate the necessary bounding condition parameters necessary for the DOE engine 808 (described below). This allows a DOE engine 808 process to also be performed in a fully automatic way. This method of "driving" DOE engine 808 with parameters generated by rules engine 806 represents yet another innovation of system 100 that heretofore has not existed.

DOE engine 808 operates on the refined experimental data that results from the Q&R processes previously described. In addition to the historical data, DOE engine 808 operates on user provided "guidance" data in the form of parameters that describe which of the variables in the final Q&R data set are to be varied in the refined experiments and which are to be held constant. To function properly, DOE engine 808 requires data concerning the amount of experimental variation required and any resource constraints that exist (e.g. number of available experiments to be conducted and the amount of critical chemical and/or protein solution available). These so-called "bounding condition parameters" are generally provided by the user, but, as described earlier, may be generated automatically from a predefined rule set focused specifically on bounding condition parameter generation. From this entire set of information, DOE engine 808 creates a matrix of refined experimental conditions that guarantees full coverage of the experimental space while ensuring that subsequent refinements (i.e. refinements of refined experiments) will proceed toward the experimental space containing likely successful outcomes.

The refined experimental conditions generated by DOE engine 808 are fed to the experiment generation module 810 (described below) where the actual refined experiment is automatically generated and loaded into an experiment editor 812 for final review by the user.

Once system 100 (via rules engine 806 and/or DOE engine 808) has generated the appropriately refined set of experimentation data, that data is transferred automatically to experiment generation module 810, which creates a complete data representation of the necessary protein crystallography experiments. It is important to note that this representation could immediately be stored in an automation run-time database (not shown) for execution by control engine 104 (i.e. to build and conduct the actual experiments). However, to ensure the "human-in-the-loop" operation often desired by scientists, the newly generated refined experiments are first loaded into experiment editor 812 for the scientist to review and edit. Once satisfied with the experiment, the scientist then submits the experiment for execution.

In summary, scientists using system 100 can plan, define, conduct, and analyze protein crystallography experiments rapidly and in a goal-directed way never before possible. As described herein, the system can automatically generate optimized experiments based on results from earlier (i.e. broad screen) experimentation. By giving the scientist the ability to "zero-in" on the region of experimental space that will likely yield the best results, scientists will be able to increase their success factors while simultaneously reducing the time and resources required for protein crystallography experimentation, resulting in higher quality crystal yields at lower costs.

While the invention has been described in detail above, the invention is not intended to be limited to the specific embodiments as described. It is evident that those skilled in the art may now make numerous uses and modifications of and departures from the specific embodiments described herein without departing from the inventive concepts.

## Claims

1. A data-centric control system (100) for performing an experiment, comprising:
a user input component (102) for receiving from a user experiment parameters that define the experiment and for storing the experiment parameters in a data repository (106), wherein the experiment parameters include information identifying the steps to be performed in executing the experiment;
a control engine (104) for retrieving from the data repository (106) the experiment parameters and for controlling automation equipment based on the retrieved experiment parameters so as to execute the defined experiment;
and a refinement engine (110) for automatically refining the experiment parameters from the data repository (106) for subsequent experiment improvement through an automatic method,
**characterized in that**
said refinement engine (110) comprises a database query tool (804) having a user interface (900) for allowing a user to construct a query in an expressive, graphical manner, by describing desired data relations through a construction of series and parallel connections between iconic representations of data fields which construction corresponds to the database query.

2. The data-centric control system (100) of claim 1, wherein the refinement engine (110) comprises:
an historical experiment database (802) that stores information about previous experiments performed by the data-centric control system (100).

3. The data-centric control system (100) of claim 1 or 2, wherein the user interface (900) of the database query tool (804) comprises:
a first panel (904) in which are displayed a plurality of icons, each of said plurality of icons being associated with a data field stored in the experiment database; and a second panel (902), wherein the user interface (900) allows the user to drag and drop the icons from the first panel (904) to the second panel (902) and to construct series and/or parallel connections between icons placed in the second panel (902), which construction corresponds to a database query.

4. The data-centric control system (100) of claim 3, wherein the user interface (900) of the database query tool (804) is configured to display results of the database query simultaneously in a table and a bar-graph.

5. The data-centric control system (100) of claim 3, wherein the user interface (900) of the database query tool (804) is configured to allow the user to select data from certain column and row locations of the table and/or directly from the bar-graph to indicate which data is to retained and/or discarded in an on-going refinement process.

6. The data-centric control system (100) of claim 1, wherein the refinement engine (110) further comprises a rules engine (806) that enables user to create experiments using rules created by other users.

7. The data-centric control system (100) of claim 1, wherein the control engine (104) comprises a plurality of control modules, each control module for controlling a different piece of automation equipment.

8. The data-centric control system (100) of claim 7, wherein the control engine (104) further comprises at least one director module, wherein the director module operates a piece of automation equipment by operating the control module associated with the piece of automation equipment.

9. The data-centric control system (100) of claim 8, wherein the director module is configured to retrieve the experiment parameters from the data repository (106).

10. The data-centric control system (100) of claim 8, wherein the director module is configured to perform a step identified by the experiment parameters by communicating with one or more of the control modules to operate one or more pieces of automation equipment.

## Patentansprüche

1. Datenzentriertes Steuersystem (100) zur Durchführung eines Versuchs, umfassend:
eine Benutzereingabekomponente (102), um von einem Benutzer Versuchsparameter zu erhalten, die den Versuch definieren, und um die Versuchsparameter in einem Datenbehälter (106) zu speichern, wobei die Versuchsparameter Informationen umfassen, die die Schritte identifizieren, die bei der Durchführung des Versuchs auszuführen sind;
eine Steuermaschine (104), um die Versuchsparameter vom Datenbehälter (106) abzufragen und um auf der Basis der abgefragten Versuchsparameter eine Automatisierungsvorrichtung zu steuern, um den definierten Versuch durchzuführen;
und eine Verfeinerungsmaschine (110), um die Versuchsparameter aus dem Datenbehälter (106) für eine nachfolgende Verbesserung des Versuchs durch ein automatisches Verfahren automatisch zu verfeinern,
**dadurch gekennzeichnet, dass**
die Verfeinerungsmaschine (110) ein Datenbankabfragetool (804) umfasst, das eine Benutzerschnittstelle (900) aufweist, um es einem Benutzer zu erlauben, eine Abfrage auf ausdrucksvolle, graphische Weise zu erstellen, und zwar durch die Beschreibung gewünschter Datenbeziehungen durch eine Erstellung von Serien- und Parallelverbindungen zwischen ikonischen Darstellungen von Datenfeldern, wobei diese Erstellung der Datenbankabfrage entspricht.

2. Datenzentriertes Steuersystem (100) nach Anspruch 1, wobei die Verfeinerungsmaschine (110) umfasst: eine historische Versuchsdatenbank (802), die Informationen über frühere Versuche speichert, die von dem datenzentrierten Steuersystem (100) durchgeführt wurden.

3. Datenzentriertes Steuersystem (100) nach Anspruch 1 oder 2, wobei die Benutzerschnittstelle (900) des Datenabfragetools (804) umfasst:
ein erstes Panel (904), in dem eine Vielzahl von Icons angezeigt werden, wobei jedes der Vielzahl von Icons mit einem Datenfeld verbunden ist, das in der Versuchsdatenbank gespeichert ist; und ein zweites Panel (902), wobei es die Benutzerschnittstelle (900) dem Benutzer ermöglicht, die Icons durch Drag-and-Drop vom ersten Panel (904) in das zweite Panel (902) zu bewegen und Serien- und/oder Parallelverbindungen zwischen den Icons zu erstellen, die im zweiten Panel (902) angeordnet sind, wobei diese Erstellung einer Datenbankabfrage entspricht.

4. Datenzentriertes Steuersystem (100) nach Anspruch 3, wobei die Benutzerschnittstelle (900) des Datenbankabfragetools (804) so konfiguriert ist, dass sie Ergebnisse der Datenbankabfrage gleichzeitig in einer Tabelle und einem Balkendiagramm anzeigt.

5. Datenzentriertes Steuersystem (100) nach Anspruch 3, wobei die Benutzerschnittstelle (900) des Datenbankabfragetools (804) so konfiguriert ist, dass sie es dem Benutzer ermöglicht, Daten aus bestimmten Stellen in den Spalten und Zeilen der Tabelle und/oder direkt aus dem Balkendiagramm auszuwählen, um anzuzeigen, welche Daten in einem laufenden Verfeinerungsprozess beizubehalten oder zu verwerfen sind.

6. Datenzentriertes Steuersystem (100) nach Anspruch 1, wobei die Verfeinerungsmaschine (110) darüber hinaus eine Regelmaschine (806) umfasst, die es dem Benutzer ermöglicht, Versuche zu schaffen, indem Regeln verwendet werden, die von anderen Benutzer geschaffen wurden.

7. Datenzentriertes Steuersystem (100) nach Anspruch 1, wobei die Steuermaschine (104) eine Vielzahl von Steuermodulen umfassen, wobei jedes Steuermodul einen anderen Bauteil der Automatisierungsvorrichtung steuert.

8. Datenzentriertes Steuersystem (100) nach Anspruch 7, wobei die Steuermaschine (104) darüber hinaus mindestens ein Direktor-Modul umfasst, wobei das Direktor-Modul einen Bauteil der Automatisierungsvorrichtung betätigt, indem es das Steuermodul betätigt, das mit dem Bauteil der Automatisierungsvorrichtung verbunden ist.

9. Datenzentriertes Steuersystem (100) nach Anspruch 8, wobei das Direktor-Modul so konfiguriert ist, dass es die Versuchsparameter vom Datenbehälter (106) abfragt.

10. Datenzentriertes Steuersystem (100) nach Anspruch 8, wobei das Direktor-Modul so konfiguriert ist, dass es einen Schritt ausführt, der durch die Versuchsparameter identifiziert wird, indem es mit einem oder mehreren der Steuermodule kommuniziert, um einen oder mehrere Bauteile der Automatisierungsvorrichtung zu betätigen.

## Revendications

1. Système de commande data-centrique (100) pour la réalisation d'une expérience, comprenant :
un composant d'entrée par l'utilisateur (102) destiné à recevoir d'un utilisateur des paramètres d'expérience définissant l'expérience et à enregistrer les paramètres d'expérience dans un référentiel de données (106), les paramètres d'expérience comprenant l'identification des étapes à réaliser pour exécuter l'expérience ;
un moteur de commande (104) destiné à récupérer les paramètres d'expérience dans le référentiel de données (106) et à commander l'équipement automatisé sur la base des paramètres d'expérience récupérés afin d'exécuter une expérience définie ;
et un moteur d'affinement (110) destiné à affiner automatiquement les paramètres d'expérience issus du référentiel de données (106) en vue de l'amélioration subséquente de l'expérience par une méthode automatique,
**caractérisé en ce que** ledit moteur d'affinement (110) comprend un outil d'interrogation de base de données (804) ayant une interface d'utilisateur (900) pour permettre à un utilisateur de construire une interrogation d'une manière expressive et graphique, en décrivant les relations de données souhaitées par une construction de liens en série et parallèles entre des représentations iconiques de champs de données, laquelle construction correspond à l'interrogation de la base de données.

2. Système de commande data-centrique (100) selon la revendication 1, dans lequel le moteur d'affinement (110) comprend une base de données d'historique des expériences (802) qui enregistre les informations des expériences précédemment réalisées par le système de commande data-centrique (100).

3. Système de commande data-centrique (100) selon la revendication 1 ou 2, dans lequel l'interface d'utilisateur (900) de l'outil d'interrogation de la base de données (804) comprend :
un premier panneau (904) affichant une pluralité d'icônes, dont chacune est associée à un champ de données enregistré dans la base de données d'expériences ;
et un second panneau (902) dans lequel l'interface d'utilisateur (900) permet à l'utilisateur de tirer et déposer les icônes du premier panneau (904) dans le second panneau (902) et
de construire des liens en série et/ou parallèles entre les icônes déposées dans le second panneau (902), cette construction correspondant à une interrogation de la base de données.

4. Système de commande data-centrique (100) selon la revendication 3, dans lequel l'interface d'utilisateur (900) de l'outil d'interrogation de base de données (804) est configurée pour afficher des résultats de l'interrogation de la base de données simultanément sous forme de tableau et d'histogramme.

5. Système de commande data-centrique (100) selon la revendication 3, dans lequel l'interface d'utilisateur (900) de l'outil d'interrogation de base de données (804) est configurée pour permettre à l'utilisateur de sélectionner des données dans certains emplacements de colonnes et de lignes du tableau et/ou directement dans l'histogramme pour indiquer quelles données doivent être conservées et/ou supprimées dans un processus d'affinement continu.

6. Système de commande data-centrique (100) selon la revendication 1, dans lequel le moteur d'affinement (110) comprend en outre un moteur de règles (806) qui permet à l'utilisateur de créer des expériences en utilisant des règles créées par d'autres utilisateurs.

7. Système de commande data-centrique (100) selon la revendication 1, dans lequel le moteur de commande (104) comprend une pluralité de modules de commande, chaque module de commande étant destiné à commander un élément différent de l'équipement automatisé.

8. Système de commande data-centrique (100) selon la revendication 7, dans lequel le moteur de commande (104) comprend en outre au moins un module directeur, lequel module directeur fait fonctionner un élément d'équipement automatisé en faisant fonctionner le module de commande associé à l'élément d'équipement automatisé.

9. Système de commande data-centrique (100) selon la revendication 8, dans lequel le module directeur est configuré pour récupérer les paramètres d'expérience dans le référentiel de données (106).

10. Système de commande data-centrique (100) selon la revendication 8, dans lequel le module directeur est configuré pour exécuter une étape identifiée par les paramètres d'expérience en communiquant avec un ou plusieurs des modules de commande pour faire fonctionner un ou plusieurs éléments d'équipement automatisé.
